# EUROPEAN PATENT APPLICATION

(11) **EP 4 733 964 A1**
(43) Date of publication of application: **29.04.2026**
(21) Application number: 24306782.4
(22) Date of filing: 23.10.2024
(51) Int. Cl.: G06F 21/31, G06F 3/01

(54) **METHODS AND SYSTEMS FOR AUTHENTICATING A USER TO ACCESS A RESOURCE**

(71) Applicant: THALES DIS FRANCE SAS, 92190 Meudon (FR); Thales Nederland B.V., 7554 RR Hengelo (NL)
(72) Inventor: DE HEER, Johan, 7141 DV Groenlo (NL); HUGOT, Didier, 92350 Le Plessis Robinson (FR); ALI, Asad Mahboob, Austin, 78732 (US)
(74) Representative: Grevin, Emmanuel

(57) **Abstract**

Embodiments of the present disclosure relates to systems, a device, a server and methods for authenticating a user to access a resource. A method comprises the steps of transmitting, by a server, a message to a device associated with a user and transmitting instructions to the device to enter the message as an input on a user interface of the device. The method further comprises the step of receiving input through tracking of the user and without requiring the user to use the virtual/soft or hard keyboard of the device. The method also comprises the steps of determining if the input matches with the message and authenticating the user by granting access of the resource to the user if the input matches with the message.

## Description

### Field of the invention

The present disclosure relates to authentication systems and methods. More particularly, the embodiments of the present disclosure relate to systems and methods for authenticating a user to access a resource.

### Background of the invention

Security is of utmost importance for providing access of online or offline resources to a user. Before granting the access of the resources to the user, several authentication solutions exist today for verifying the identity of the user and ensuring that the access of the resources is provided to a right/permitted user. One such authentication solution involves the usage of a one-time password (referred hereinafter as "OTP") which is transmitted to a device of the user for authenticating the user. If the user enters the correct OTP, then the access of the resources is provided to the user, otherwise the access of the resources is denied to the user.

However, such existing authentication solution has its own downside. When the user reads the OTP or enters the OTP on the device to request the access of a particular resource, this act of entering this OTP on the device can get compromised. There are numerous ways in which the OTP can be compromised which includes, shoulder surfers, keyboard loggers, image capture, etc.

Therefore, there is a need for an improved solution which offers a secure way of entering the OTP on the device. There is also a need for an improved solution which prevent other nearby user (or visitors) from reading the OTP on the device while the user enters the OTP on the device.

### Summary of the Invention

In some exemplary embodiments, a method is provided for authenticating a user to access a resource. The method comprises the steps of transmitting, by a server, a message to a device associated with a user and transmitting instructions to the device to enter the message as an input on a user interface of the device. The method also comprises the step of receiving the input through tracking of the user and without requiring the user to use the virtual/soft or hard keyboard of the device. The method also comprises the step of determining if the input matches with the message and authenticating the user by granting access of the resource to the user if the input matches with the message.

In some exemplary embodiments, a server is provided for authenticating a user to access a resource. The server comprises a transmitter configured to transmit, from the server, a message to a device associated with a user and transmit instructions to the device to enter the message as an input on a user interface of the device. The server also comprises a receiver configured to receive the input through tracking of the user and without requiring the user to use the virtual or hard keyboard. The server also comprises a processing unit configured to determine if the input matches with the message and authenticate the user by granting access of the resource to the user if the input matches with the message.

In some exemplary embodiments, a method is provided for authenticating a user to access a resource. The method comprises the steps of receiving, by a device associated with a user, a message from a server and receiving instructions by the device to enter the message as an input on a user interface of the device. The method also comprises the step of tracking interaction of the user with the instructions displayed on the user interface of the device, wherein the interaction of the user with the instructions excludes usage of virtual/soft or hard keyboard of the device. The method also comprises the steps of determining the input based on the tracked interaction of the user and transmitting the input to the server to authenticate the user for granting access of the resource to the user.

In some exemplary embodiments, the method further comprises the step of denying access of the resource to the user if the input does not match with the message

In some exemplary embodiments, the device associated with the user comprises a first device and a second device.

In some exemplary embodiments, the message is transmitted to the first device and the instructions to enter the message is transmitted to the second device.

In some exemplary embodiments, the input is entered at the user interface of the second device.

In some exemplary embodiments, the instructions transmitted to the device comprise numbers, alphabets, symbols, textual message, words, phrases, and/or patterns.

In some exemplary embodiments, the tracking of the user is performed using at least one of a brain computer interface (BCI) tracker and/or an eye tracker.

In some exemplary embodiments, the BCI tracker tracks brain activity of the user and/or the eye tracker tracks eyes of the user to determine the input.

In some exemplary embodiments, the input received through the tracking of the user further comprises untouch/non-physical interaction of the user with the instructions displayed at the user interface of the device to enter the input.

In some exemplary embodiments, the processing unit is further configured to deny access of the resource to the user if the input does not match with the message.

In some exemplary embodiments, the method also comprises the steps of identifying one or more eye gesture performed by the user using at least one of a brain computer interface (BCI) tracker and an eye tracker, wherein the one or more eye gesture is performed to deselect a character of the input at the user interface or to indicate the completion of entering the input.

### Brief description of the drawings

Figure 1A illustrates a first exemplary system architecture of the present disclosure, in accordance with a first exemplary embodiment of the present disclosure,
Figure 1B illustrates a second exemplary system architecture of the present disclosure, in accordance with a second exemplary embodiment of the present disclosure,
Figure 2A illustrates exemplary tracking of a user using a BCI tracker, in accordance with an exemplary embodiment of the present disclosure,
Figure 2B illustrates exemplary tracking of a user using an eye tracker, in accordance with an exemplary embodiment of the present disclosure,
Figure 3 illustrates exemplary selection and entering one or more characters of an input on a user interface through the tracking of the user, in accordance with an exemplary embodiment of the present disclosure,
Figure 4 illustrates a first exemplary method flow diagram for authenticating the user to access a resource, in accordance with a first exemplary embodiment of the present disclosure,
Figure 5 illustrates a second exemplary method flow diagram for authenticating the user to access a resource, in accordance with a second exemplary embodiment of the present disclosure, and
Figure 6 depicts a block diagram of a server and/or a device, in accordance with an exemplary embodiment of the present disclosure.

### Detailed description of the preferred embodiments

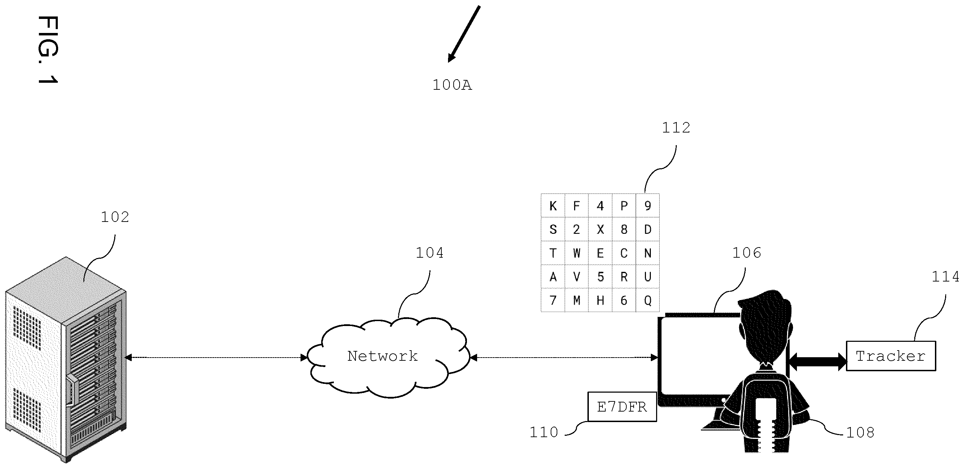

Figure 1A depicts a first exemplary system architecture 100A in accordance with a first exemplary embodiment of the present disclosure. The system architecture 100A comprises, but is not limited to, a sever 102 connected to a device 106 through a network 104.

As used herein, the term "server" may refer to a physical server in a data center or a cloud server running in a cloud computing environment and possessing the capabilities of performing the authentication procedures.

As used herein, the term "device" may refer to a smart device, a cellular device, a mobile phone, a smart watch, a tablet, a personal digital assistance, a laptop, a personal /desktop computer, a television, or any such device that is obvious to a person skilled in the art.

As used herein, the term "network" may refer to a wired network or a wireless network. The wired network generally requires cables, ethernet or wires to connect the device 106 with the network 104. The wireless network enables the device 106 to get wirelessly connected with the network 104. Examples of such wireless network includes, but is not limited to, a cellular network (such as GSM network, CDMA Network or any other telecommunication mobile network) or a short-range network (WiFi network, Near-field communication (NFC), a ZigBee network, a bluetooth network etc.).

The server 102 may be used for authenticating a user 108 to grant or deny the access of a resource (not shown) to the user 108. As used herein, the term "resource" may refer to an application, a service, a database, a television, a desktop computer, a folder, a file, or any such resource that is obvious to a person skilled in the art.

Further, the device 106 is associated with the user 108 who is using the device 106 for various purposes as described herein. For an instance, the user 108 wants to use and access a resource (such as a social networking service such as Facebook) on the device 106. For this, the user 108 opens a webpage of the social networking service by entering the uniform resource locator (URL) of the web service in a web browser installed on the device 106. Alternatively, in another instance, the user 108 wants to open and access other resource (such as any mobile application, such as an e-commerce mobile application) installed on the device 106.

When the user 108 opens the webpage of the social networking service or open the e-commerce application installed on the device 106, the device 106 may transmit an access request to the server 102 through the network 104 for accessing the resource (i.e. social networking service or the e-commerce application). When the server 102 receives the access request, the server 102 may generate a message 110 and may transmit the generated message 110 to the device 106 associated with the user 108 through the network 104. As used herein, the "message" may refer to a one-time password, a code, a key, or a secret generated by the server 102 only for the user 108 to access the resource. Herein, the message 110 may be automatically generated by a software installed on the server 102 or a software installed on any other server remote to the server 102.

In some exemplary embodiments, the message 110 transmitted to the device 106 is a cellular message which is received in a message inbox of the device 106. In other exemplary embodiments, the message 110 transmitted to the device 106 is a message which is received by an email registered by the user 108 or in a chat box of WhatsApp application of the user 108 installed on the device 106.

The message 110 may be a combination of alphabets, numbers, special symbols (such as @, !"&%$ etc.) etc. Further, the length of the message 110 may vary from resource to resource or different resource types. Herein, as an example, the message 110 is "E7DFR". Furthermore, such message 110 may be valid only for a pre-defined interval of time. For example, the message 110 may be valid only for 5 minutes.

Moreover, the server 106 may also generate instructions 112 for the user 108 which enables the user 108 to enter the message 110 as an input on a user interface of the device 106. Then, the server 102 may transmit the generated instructions 112 to the device 106 associated with the user 108 through the network 104. In a first exemplary embodiment, the server 102 first transmits the message 110 to the device 106 and then after transmitting the message 110, the server 102 then transmits the instructions 112 to the device 106 associated with the user 108. In a second exemplary embodiment, the server 102 first transmits the instructions 112 to the device 106 and then after transmitting the instructions 112, the server 102 then transmits the message 110 to the device 106 associated with the user 108. In a third exemplary embodiment, the server 102 simultaneously transmits the message 110 as well as the instructions 112 to the device 106 associated with the user 108.

As used herein, the "instructions" may refer to a soft or virtual keypad displayed on the user interface of the device 106 or a set/combination of alphabets, numbers, symbols (such as @, !"&%$ etc.) randomly arranged in a grid displayed on the user interface of the device 106.

On receiving the message 110 and the instructions 112 by the device 106 from the server 102, the user 108 may be required to enter an input by selecting one or more characters but without requiring the user 108 to use the virtual/soft or hard keyboard of the device 106. In particular, the user 108 reads the message 110 received by the device 106 and then enters the message 110 as the input at the user interface of the device 106 without using the virtual/soft or hard keyboard of the device 106. Herein, the device 106 may track untouch/non-physical interactions of the user 108 with the instructions 112 displayed on the user interface of the device 106.

For this, the device 106 may use a tracker 114 to track the untouch/non-physical interaction of the user 108 with the instructions 112 displayed at the user interface of the device 106 to enter the input. Such interaction of the user 108 with the instructions 112 excludes usage of virtual/soft or hard keyboard of the device 106. In some exemplary embodiments, the instruction 112 displayed on the device 106 is displayed at a certain frequency (for example, 60 Hertz). Further, individual characters of the instruction 112 can also be displayed at different frequencies for the tracker 114 to pick this up. For example, E could be displayed at 62 Hertz and R could be displayed at 64 Hertz.

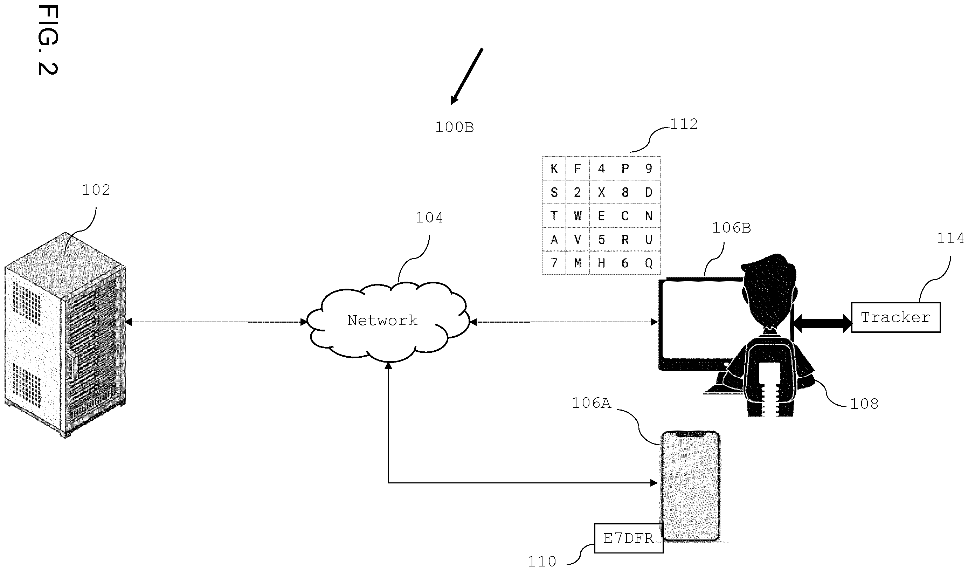

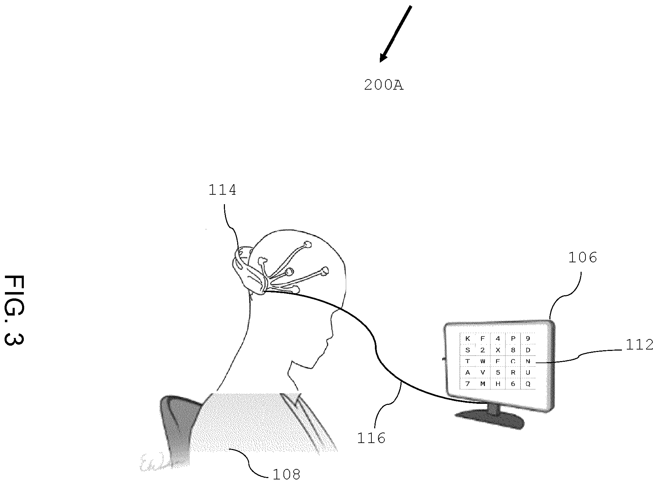

In some exemplary embodiments, the tracker 114 is a set of computer instructions or software for tracking the interaction of the user 108 with the instructions 112. In some other exemplary embodiments, the tracker 114 is a device which is removably attached to the device 106. Figures 2A, 2B, 3 explain the tracker 114 and interaction of the user 108 in brief details.

Figure 1B depicts a second exemplary system architecture 100B, in accordance with a second exemplary embodiment of the present disclosure. In this second exemplary embodiment, the sever 102 may be connected to two air-gapped devices (instead of a single device as shown in Figure 1A) namely, a first device 106A and a second device 106B through the network 104. Although, Figures 1A and 1B show that the first device 106A and the second device 106B are connected through the same network 104, however, it is understood for a person skilled in the art that the first device 106A and the second device 106B can also be connected through two different or separate networks.

Herein, the two air-gapped devices may refer to two devices which are physically-distant or physically separated with each other and yet belong to and operated by the same user. In some exemplary embodiments, there is no direct data flow between the two air-gapped devices.

Further, both of the first device 106A and the second device 106B are associated the user 108 i.e. same user who is using these two air-gapped devices 106A, 106B. As can be seen here, Figure 1B shows the first device 106A as a mobile device and the second device 106B as a computer or a desktop, as an example.

For an instance, the user 108 wants to use and access a resource on the second device 106B. When the user 108 opens a webpage of a web service or open an application installed on the second device 106B, the second device 106B may transmit an access request to the server 102 through the network 104 for accessing the resource. When the server 102 receives the access request, the server 102 may generate a message 110 and may transmit the generated message 110 to the first device 106A associated with the user 108 through the network 104.

Moreover, the server 102 may also generate instructions 112 for the user 108 which enables the user 108 to enter the message 110 as an input on a user interface of the device 106. Then, the server 106 may transmit the generated instructions 112 to the second device 106B associated with the user 108 through the network 104. In a first exemplary embodiment, the server 102 first transmits the message 110 to the first device 106A and then after transmitting the message 110, the server 102 then transmits the instructions 112 to the second device 106B associated with the user 108. In a second exemplary embodiment, the server 102 first transmits the instructions 112 to the second device 106B and then after transmitting the instructions 112, the server 102 then transmits the message 110 to the first device 106A associated with the user 108. In a third exemplary embodiment, the server 102 simultaneously transmits the message 110 as well as the instructions 112 to the first device 106A and the second device 106B associated with the user 108.

In this second exemplary embodiment, the user 108 opens a social networking service (such as Facebook) by entering the URL of this social networking website at the user interface of the second device 106B. Since the user 108 opens and tries to access the social networking service on the second device 106B, the server 102 transmits the instructions 112 to the second device 106B.

On receiving this access request, the server 102 transmits the message 110 to the first device 106A. This is due to the reason that a mobile number (of the user 108) which is registered with the social networking service is used in the first device 106A, thereby, the first device 106A receives the message 110 as a cellular message. This could also be due to the reason that message 110 is received by an email address registered by the user 108 which is configured/accessible in the first device 106A or in a chat box of WhatsApp application of the user 108 installed on the first device 106A. Therefore, the message 110 and the instructions 112 are received by two separate and different air-gapped devices 106A, 106B of the same user 108.

Figure 2A depicts exemplary tracking of the user 108 using the tracker 114, in accordance with an exemplary embodiment of the present disclosure. Herein, the tracker 114 may be removably attached to the device 106 through a wired network 106 (such as a cable or a wire). Although, Figure 2A shows that the tracker 114 is attached to the device 106 through the wired network 106; however, it is understood for a person skilled in the art that the tracker 114 can also be attached to the device 106 through a wireless network such as a cellular network or a short-range network (WiFi network, Near-field communication (NFC), a ZigBee network, a bluetooth network etc.).

In this exemplary embodiment, the user 108 is wearing a headset (which is the tracker 114) equipped with electroencephalography (EEG) sensors to track the brain activity of the user 108. As soon as the user 108 wears the EEG-enabled headset, the tracker 114 tracks the brain activity of the user 108 when the user 108 starts thinking about the message 110 and/or starts looking at the instructions 112 displayed on the user interface of the device 106. Such brain activity of the user 108 is analyzed and processed by a brain-computer interface (BCI) using paradigms such as (a) P300 paradigm, (b) Steady-State Visual Evoked Potential (SSVEP) paradigm, or (c) Motor imagery (MI) paradigm. Further, the authentication of the user 108 may be performed by a Brain Computer Interface (BCI) server in communication with a BCI Authentication module as described in WIPO/PCT publication no. 2024074717A1 titled "System and method of electroencephalography (EEG) authentication" (which is incorporated herein by reference).

By analyzing the brain activity of the user 108 when the user 108 thinks about the message 110 and/or looks at the instructions 112, the tracker 114 determines the input which the user 108 wishes to enter at the user interface of the device 106 without using the virtual/soft or hard keyboard of the device 106. For an example, the user 108 may be thinking about a first character of the message 110 (i.e. "E") and then, may start looking at the same character "E" at the instructions 112 displayed at the user interface of the device 106. Such brain activity of the user 108 at that moment is processed to determine that the user 108 wants to enter or select character "E" at the instructions 112 displayed at the user interface.

Furthermore, by using several recordings of brain activity (EEG data) of the user 108, a machine-learning model specific to the user 108 may be created. This model is then used to determine if new EEG data comes from the same user or not (EEG authentication).

Figure 2B illustrates tracking of the user 108 using an eye tracker, in accordance with an exemplary embodiment of the present disclosure. Herein, the eye tracker 114 may be computer program or a software code which may be implemented on the device 106. Such eye tracker 114 may either be stored locally in a memory of the device 106 or externally on a cloud or a server remote to the device 106. In some other exemplary embodiments, the eye tracker 114 may be a camera of the device 106 or an imaging device externally connected to the device 106.

In this exemplary embodiment, the eye tracker 114 continuously tracks the untouch/non-physical eye interaction of the user 108 with the instructions 112 displayed on the user interface of the device 106. When the user 108 starts looking/gazing at the instructions 112 displayed on the user interface of the device 106, the eye tracker 114 tracks the eye gazing of the user 108 at the user interface of the device 106 and determines the input which the user 108 wishes to enter at the user interface of the device 106 without using the virtual/soft or hard keyboard of the device 106. For an example, the user 108 may start focusing the eyes on character "E" at the instructions 112 displayed at the user interface of the device 106, such eye focusing of the user 108 at the instructions 112 is tracked by the eye tracker 114. At such moment, the eye tracker 114 determines that the user 108 wants to enter or select character "E" at the instructions 112 displayed at the user interface. In some exemplary embodiments, the eye tracker 114 selects a character at the instructions 112 displayed at the user interface when the eye tracker 114 tracks that the user 108 is gazing at that character for a continuous per-determined time-period. For an instance, the user 108 is gazing at the character "E" for continuous time-period of 5 milli-seconds. This is when the eye tracker 114 may determine that the user 108 wishes to select the character "E" at the instructions 112 and enter this character "E" as an input. Such per-determined time-period may be defined by a manufacturer or a developer of the eye tracker 110.

Although Figure 2A describes brain-computer interface tracking of the user 108 and Figure 2B describes eye tracking of the user 108 through the tracker 114; however, it is understood for a person skilled in the art that the present disclosure can employ the combination of the brain-computer interface tracking and eye tracking of the user 108 at the same time to track the user 108.

Figure 3 depicts exemplary selection of one or more characters of the input on the user interface through the tracking of the user 108, in accordance with an exemplary embodiment of the present disclosure. Considering examples provided in exemplary Table 1 below, that at time stamp of 11:30:20:01 AM, the tracker 114 tracks that the user 108 has been thinking about or gazing the character "E" (displayed at the instructions 112) for a continuous time-period of 5 milli-seconds, the tracker 114 selects the "E" as a first character of the input.

| Character Selected | Time Stamp | Time to select the character |
|---|---|---|
| E | 11:30:20:01AM | 5 milli-seconds |
| 7 | 11:30:20:05AM | 5 milli-seconds |
| D | 11:30:20:10AM | 5 milli-seconds |
| F | 11:30:20:15AM | 5 milli-seconds |
| R | 11:30:20:20AM | 5 milli-seconds |

### Exemplary Table 1

Then, at time stamp of 11:30:20:05 AM, the tracker 114 tracks that the user 108 has been thinking about or gazing the character "7" (displayed at the instructions 112) for a continuous time-period of 5 milli-seconds, the tracker 114 selects the character "7" as a second input after the first input. Afterwards, at time stamp of 11:30:20:10 AM, the tracker 114 tracks that the user 108 has been thinking about or gazing the character "D" (displayed at the instructions 112) for a continuous time-period of 5 milli-seconds, the tracker 114 selects the character "D" as a third input after the second input. Then, at time stamp of 11:30:20:15 AM, the tracker 114 tracks that the user 108 has been thinking about or gazing the character "F" (displayed at the instructions 112) for a continuous time-period of 5 milli-seconds, the tracker 114 selects the character "F" as a fourth input after the third input. And, at time stamp of 11:30:20:20 AM, the tracker 114 tracks that the user 108 has been thinking about or gazing the character "R" (displayed at the instructions 112) for a continuous time-period of 5 milli-seconds, the tracker 114 selects the character "R" as a fifth input after the fourth input.

The tracker 114 may also maintain the time stamp for each character as and when such character is selected as an input. Such time stamp for each character may be used for determining the sequence of the characters selected and entered at the instructions 112. The sequence of the characters selected and entered at the instructions 112 helps in determining the entire or complete input by the user 108 since the input is entered as character-by-character one after another through tracking of the user 108. As explained in exemplary Table 1 above, the input "E7DFR" is entered by the user 108 as characters "E", "7", "D", "F" and "R" in the sequence one after another.

As shown in Figure 3, when the tracker 114 selects any character (such "E" as a first input or any other character as described above), the color of the grid-cell of that selected character at the instructions 112 may be changed or such character at the instructions 112 may be highlighted (as grey color) to distinguish the selected characters as the input from other non-selected characters of the instructions 112.

In some exemplary embodiments, when the user 108 completes the selection of all characters (e.g. "E", "7", "D", "F" and "R") as the input, the user 108 may perform one or more eye gestures to indicate the completion of entering the input at the user interface. Such one or more eye gestures are identified by the tracker 114 As an example, once the user 108 has entered the last character "R" of the message 110 as the input, the user 108 can blink his/her eyes a pre-defined number of time to indicate the completion of entering the input. For an instance, the user 108 may blink his/her eyes five times continuously to indicate the completion of entering the input. The blinking of the eye is detected by the tracker 114 either through eye-tracking technology or through BCI (brain computer interface) technology. To indicate the completion of entering the input, the instructions 112 displayed at the user interface of the device 106 may comprises such information for the user 108 to perform the one or more eye gestures to indicate the completion of entering the input. In other exemplary embodiments, when the tracker 114 does not receive any further selection of the character for another continuous time-period, the tracker 114 considers this as the indication for the completion of entering the input and thus, the tracker 114 communicates the entered input (as selected characters) to the device 106 and the device 106 transmits the entered input to the server 102 through the network 104.

Moreover, the server 102 may receive the input from the device 106 and may compare the input received from the device 106 with the message 110 transmitted to the device 106. If the input received from the device 106 matches with the message 110 transmitted to the device 106, then, the server 102 may authenticate the user 108 by granting or allowing the access request to the user 108 for accessing the resource. For the example explained in Figure 3 above, the input "E7DFR" matches with the message 110 (i.e. "E7DFR"), the server 102 authenticates the user 108 by granting the access request to the user 108 for accessing the resource such as the social networking service on the device 106/106B such as Facebook or e-commerce mobile application installed on the device 106/106B).

And, if the input received from the device 106 does not match with the message 110 transmitted to the device 106, then, the server 102 does not authenticate the user 108 and denies the access request to the user 108 for accessing the resource.

The present disclosure also encompasses one or more options for the user 108 to deselect a character if that character is selected by the tracker 114 which the user 108 does not intend to select and enter. For an example, the character "K" (on the left to the character "F" which was intended to be selected) may be selected by the tracker s114 because the user 108 was mistakenly gazing at the character "K" instead of character "F". In such a scenario, the user 108 may perform the one or more eye gestures (such as moving the eyes in a specific direction i.e. from left to right direction or right to left direction) for a few milli-seconds to deselect such character. Such one or more eye gestures are identified by the tracker 114 and may be pre-defined by the manufacturer of the tracker 114.

The present disclosure also encompasses the tracker 114 for employing the brain-computer interface tracking and/or the eye tracking of the user 108 to identify the one or more eye gestures (such eye blinking or eye movement in specific direction) performed by the user 108.

Thereby, the present disclosure offers the following technical advantages over the existing authentication solutions: a) eliminates the problems of shoulder surfers, keyboard loggers, image capture by tracking the user 108 to input the message at the user interface as described in Figures 2A, 2B and 3, b) provides a secure way of entering the message as an input on the device without requiring the user 108 to use any virtual/soft or hard keyboard of the device 106, c) offers an easy authentication solution for physically-challenged people by eliminating the need of using any virtual/soft or hard keyboard of the device 106 or without the need of any touch/physical interaction with the instructions displayed at the user interface of the device 106.

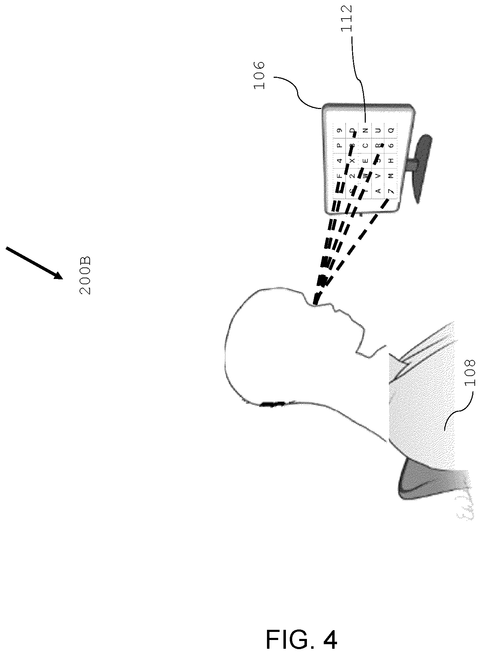

Figure 4 depicts a first exemplary method flow diagram 400 for authenticating the user 108 to access the resource, in accordance with a first exemplary embodiment of the present disclosure. At step 402, the method flow diagram 400 starts.

At step 404, the server 102 transmits the message 110 to the device 106 (as explained in Figure 1A) or the first device 106A (as explained in Figure 1B) associated with the user 108.

At step 406, the server 102 transmits the instructions 112 to the device 106 (as explained in Figure 1A) or to the second device 106B (as explained in Figure 1B) to enter the message as an input on a user interface of the device 106 (as explained in Figure 1A) or a user interface of the second device 106B (as explained in Figure 1B).

At step 408, the server 102 receives the input through tracking of the user 108 and without requiring the user 108 to use the virtual/soft or hard keyboard of the device 106 (as explained in Figures 1A, 2A-2B) or of the second device 106B (as explained in Figure 1B, 2A-2B) to enter the input at the user interface of the device 106/106B.

At step 410, the server 102determines if the input matches with the message 110 by comparing the input with the message 110. Such comparison may include checking a sequence/order of characters of the input (as explained in Figure 3 above) received from the device 106/106B with a sequence/order of characters of the message 110 transmitted to the device 106/106A.

At step 412, the server 102authenticates the user 108 by granting access of the resource to the user 108 if the input matches with the message 110. And, if the input received from the device 106 does not match with the message 110 transmitted to the device 106, then, the server 102 does not authenticate the user 108 and denies the access request to the user 108 for accessing the resource (as explained above in Figure 3).

At step 414, the method flow diagram 400 ends.

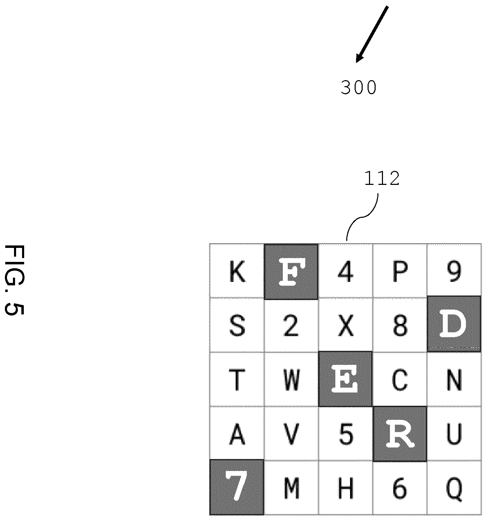

Figure 5 depicts a second exemplary method flow diagram 500 for authenticating a user 108 to access a resource, in accordance with a second exemplary embodiment of the present disclosure. The method flow diagram 500 starts at step 502.

At step 504, a device 106/106A associated with the user 108, receives a message 110 from a server 102. This has been explained in detail in Figures 1A and 1B.

At step 506, the device 106/106B receives instructions 112 to enter the message 110 as an input on a user interface of the device 106/106B. This has been explained in detail in Figures 1A and 1B.

At step 508, the device 106 tracks interaction of the user 108 with the instructions 112 displayed on the user interface of the device 106/106B. The device 106 tracks interaction of the user 108 through the track 114. Further, the interaction of the user 108 with the instructions 112 excludes usage of virtual/soft or hard keyboard of the device 106/106B. This has been explained in detail in Figures 2A and 2B.

At step 510, the device 106 determines the input based on the tracked interaction of the user 108. This has been explained in detail in Figure 3 and exemplary Table 1.

At step 512, the device 106/106B transmits the input to the server 102 to authenticate the user 108 for granting access of the resource to the user 108. This has been explained in detail in Figure 3 and exemplary Table 1.

At step 514, the method flow diagram 500 ends.

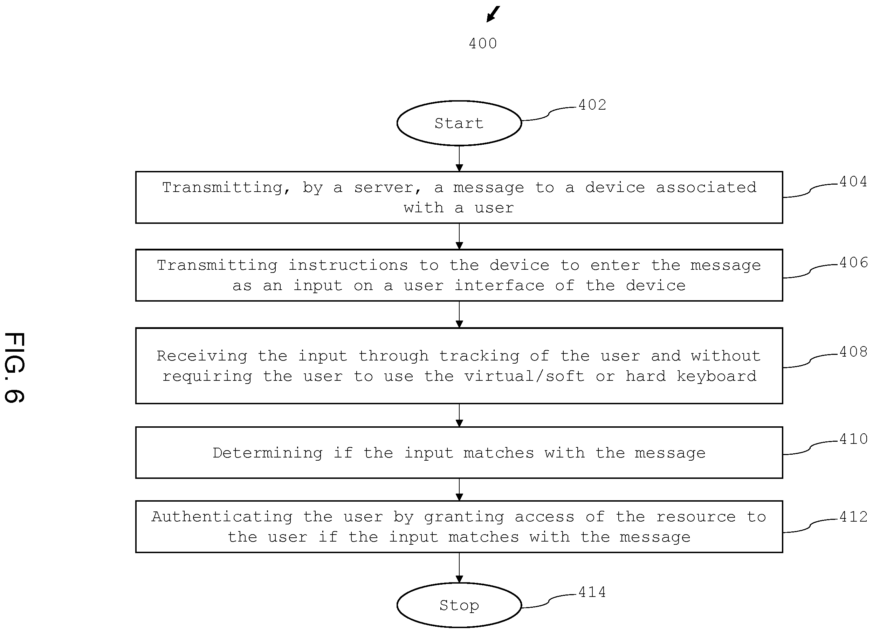

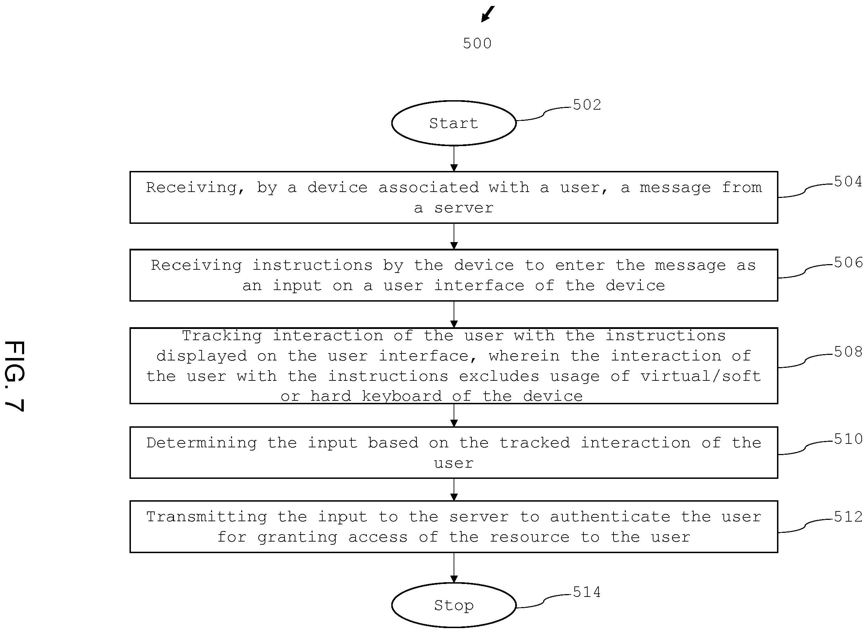

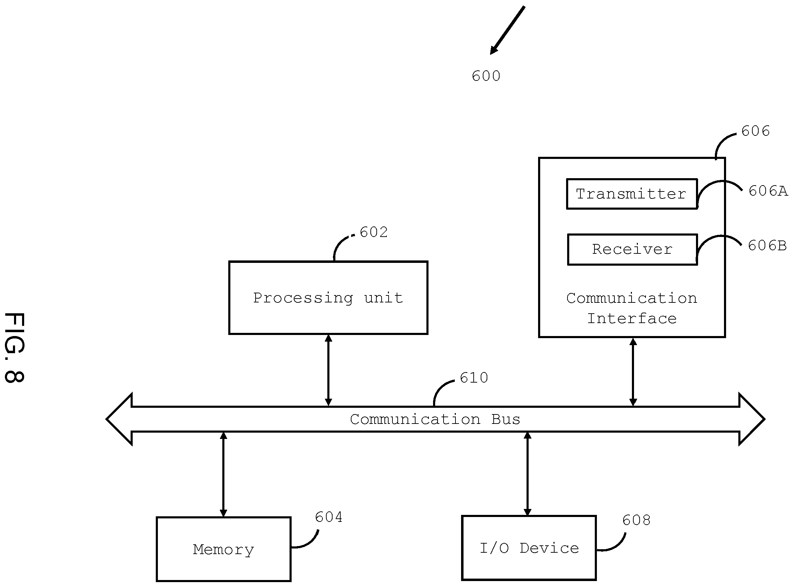

Figure 6 depicts a block diagram of the server 102 and/or the device 106/106A/106B, in accordance with an exemplary embodiment of the present disclosure. The server 102 and/or the device 106/106A/106B may include processing unit 602, memory 604, a communication interface 606, and input/output devices 608. Each of these components may be operatively coupled to a communication bus 610, which may be configured, e.g., for optical and/or electrical communication.

The processing unit 602 may include a central processing unit, application-specific integrated circuit (ASIC), digital signal processor (DSP), or another type of processing circuit. The processing unit 602 may be implemented using mainframe, distributed processor, multi-core, parallel, grid, or other architectures. The processing unit 602 may be configured to implement the functions, procedures, and/or methods proposed by the present invention as described in the above Figures. Further, layers of a wireless interface protocol may be implemented by the processing unit 602.

The memory 604 may be any suitable medium that participates in providing instructions to the processing unit 602 for execution. For example, the memory 604 may be non-transitory or non-volatile medium, such as a magnetic disk or solid-state non-volatile memory or volatile medium such as random-access memory (RAM). The instructions or modules stored on memory 604 may include machine-readable instructions executed by the processing unit 602 that cause the processing unit 602 to perform the methods and functions as described herein.

Further, the memory 604 may be communicatively coupled to the processing unit 602 and store information related to operations of the processing unit 608. The memory 604 may be located inside or outside the processing unit 602 and may be connected to processing unit 608 through various well-known means.

The communication interface 606 may use any apparatus such as a transceiver or an RF module to communicate with another device or the network 104 such as the Ethernet, a radio access network (RAN), or a wireless local area network (WLAN). In other examples, the communication interface 606 may be a Local Area Network (LAN) interface, a wireless 802.11x interface, a 3G, 4G, 5G, or 6G mobile WAN or a WiMax WAN. In particular, a transmitter 606A of the communication interface 606 may be configured to transmit or receive the message 110 and to transmit or receive the instructions 112. A receiver 606B of the communication interface 606 may be configured to receive or transmit the input through tracking of the user 108 and without requiring the user 108 to use the virtual or hard keyboard to enter the input. The processing unit 602 may be configured to determine if the input matches with the message 110, and configured to authenticate the user 108 by granting access of the resource to the user 108 if the input matches with the message 110.

The input/output devices 608 may include one or more input and output devices. The input device may be a keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. The output device may be a printer, fax machine, video display, liquid crystal display (LCD), light-emitting diode (LED), Organic-LED (OLED), Quantum Dot Light Emitting Diode (QLED), Micro LED, Mini-LED, Quantum Dot OLED (QD-OLED), audio speaker, etc.

Implementations and all of the functional operations described in this description may be realized in digital electronic circuitry, or in computer software, firmware, or hardware, including the structures disclosed in this description and their structural equivalents, or in combinations of one or more of them.

The foregoing discussion of the disclosure has been presented for purposes of illustration and description. The foregoing is not intended to limit the disclosure to the form or forms disclosed herein. In the foregoing detailed description for example, various features of the disclosure are grouped together in one or more examples, configurations, or aspects for the purpose of streamlining the disclosure. The features of the examples, configurations, or aspects of the disclosure may be combined in alternate examples, configurations, or aspects other than those described above. Hence, the present disclosure and drawings should not be considered in a limiting sense, as it is understood that an invention presented within a disclosure is in no way limited to those examples specifically illustrated.

Accordingly, the above description and any accompanying drawings, illustrations, and figures are intended to be illustrative but not restrictive. The scope of any invention presented within this disclosure should, therefore, be determined not with simple reference to the above description and those examples shown in the figures, but instead should be determined with reference to the pending claims along with their full scope or equivalents.

## Claims

1. A method for authenticating a user to access a resource, the method comprising:
- transmitting, by a server, a message to a device associated with a user;
- transmitting instructions to the device to enter the message as an input on a user interface of the device;
- receiving the input through tracking of the user and without requiring the user to use the virtual/soft or hard keyboard of the device;
- determining if the input matches with the message; and
- authenticating the user by granting access of the resource to the user if the input matches with the message.

2. The method according to previous claim, further comprising, denying access of the resource to the user if the input does not match with the message.

3. The method according to any previous claim, wherein the device associated with the user comprises a first device and a second device.

4. The method according to claim 3, wherein the message is transmitted to the first device and the instructions to enter the message is transmitted to the second device.

5. The method according to any of claim 3 or claim 4, wherein the input is entered at the user interface of the second device.

6. The method according to any previous claim, wherein the instructions transmitted to the device comprise numbers, alphabets, symbols, textual message, words, phrases, and/or patterns.

7. The method according to any previous claim, wherein the tracking of the user is performed using at least one of a brain computer interface (BCI) tracker and/or an eye tracker.

8. The method according to claim 7, wherein the BCI tracker tracks brain activity of the user and/or the eye tracker tracks eyes of the user to determine the input.

9. The method according to any previous claim, wherein the input received through the tracking of the user further comprises untouch/non-physical interaction of the user with the instructions displayed at the user interface of the device to enter the input.

10. A server for authenticating a user to access a resource, the server comprising:
- a transmitter configured to:
transmit, from the server, a message to a device associated with a user, and
transmit instructions to the device to enter the message as an input on a user interface of the device;
- a receiver configured to receive the input through tracking of the user and without requiring the user to use the virtual or hard keyboard; and
- a processing unit configured to:
determine if the input matches with the message, and
authenticate the user by granting access of the resource to the user if the input matches with the message.

11. The system according to any previous claim, wherein the processing unit is further configured to deny access of the resource to the user if the input does not match with the message.

12. The system according to any previous claim, wherein the device associated with the user comprises a first device and a second device.

13. The system according to claim 12, wherein the message is transmitted to the first device and the instructions to enter the message is transmitted to the second device and the input is entered at the user interface of the second device.

14. A method for authenticating a user to access a resource, the method comprising:
- receiving, by a device associated with a user, a message from a server;
- receiving instructions by the device to enter the message as an input on a user interface of the device;
- tracking interaction of the user with the instructions displayed on the user interface of the device, wherein the interaction of the user with the instructions excludes usage of virtual/soft or hard keyboard of the device;
- determining the input based on the tracked interaction of the user; and
- transmitting the input to the server to authenticate the user for granting access of the resource to the user.

15. The method of any previous claim, further comprising, identifying one or more eye gesture performed by the user using at least one of a brain computer interface (BCI) tracker and an eye tracker, wherein the one or more eye gesture is performed to deselect a character of the input at the user interface or to indicate the completion of entering the input.
